# FASCICULE DE BREVET EUROPEEN

(11) **EP 2 401 180 B1**
(45) Date de publication et mention de la délivrance du brevet: **19.12.2012**
(21) Numéro de dépôt: 10708266.1
(22) Date de dépôt: 02.02.2010
(51) Int. Cl.: B60R 13/04, F16B 5/12

(54) **PIECE D'ASPECT COMPORTANT DES MOYENS DE FIXATION**
..
APPEARANCE PART HAVING FASTENING MEANS

(30) Priorité: 27.02.2009 FR 0951263
(43) Date de publication de la demande: 04.01.2012
(73) Titulaire: Renault S.A.S., 92100 Boulogne-Billancourt (FR)
(72) Inventeur: VOLLET, Raphael, F-91340 Ollainville (FR)
(74) Mandataire: Rougemont, Bernard
(86) Numéro de dépôt international: PCT/FR2010/050166
(87) Numéro de publication internationale: WO 2010/097531

(56) Documents cités:
- EP-A- 1 442 941
- EP-A- 1 947 352

## Description

L'invention concerne une pièce d'aspect en matière plastique injectée, comportant une partie sensiblement plane, orientée selon un plan de référence donné, dont une face interne est munie d'au moins un moyen de fixation, le moyen de fixation étant constitué par un pontet présentant un plan médian, apte à supporter une agrafe et présentant deux parois latérales, opposées par rapport au plan médian et reliées entre elles par une paroi de support d'agrafe.

Le brevet EP 1.1442.941 décrit en piece d'aspect en matière plastique injectée Selon le préambule de la revendication 1.

On trouve de telles pièces d'aspect dans le domaine plus particulier des baguettes latérales de porte de véhicule automobile.

Les baguettes de porte comportant un porte-agrafe intégré et une surface lisse et peinte, présentent souvent des défauts d'aspect, qui proviennent de la conception du porte-agrafe.

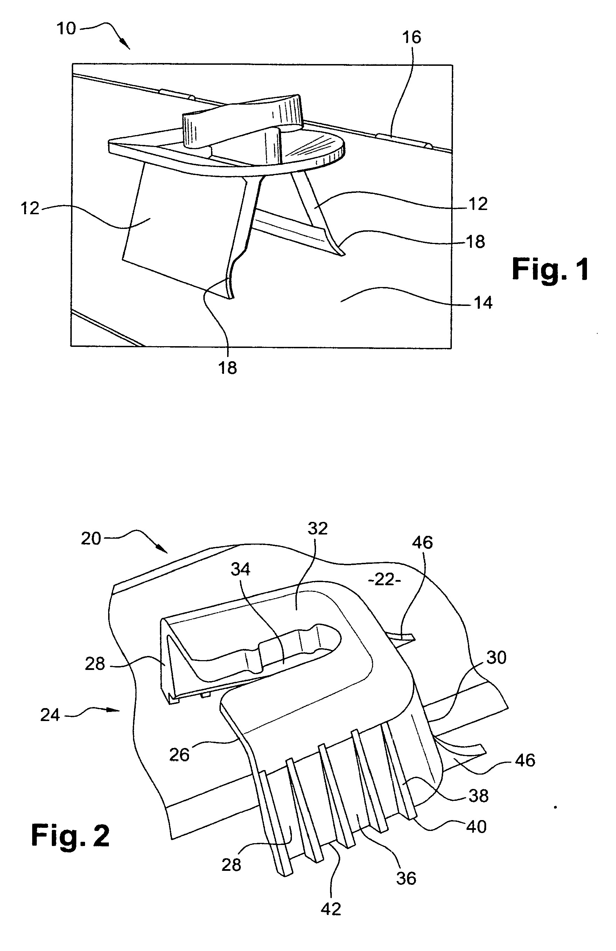

Ainsi, tel que représenté à la figure 1, le porte-agrafe 10 de l'état de la technique comporte des parois latérales 12 raccordées à une face interne 14 d'une baguette 16 par l'intermédiaire d'une toile amincie 18. Cependant, le retrait de la matière bloquée dans cette zone par la cale du moule (non représentée), génère une déformation de la pièce au moment du démoulage. Il peut aussi se produire une retassure si le ratio entre l'épaisseur de la baguette et l'épaisseur du porte-agrafe n'est pas optimisé. Il apparait ainsi difficile d'utiliser un tel porte-agrafe, en raison de la possibilité limitée de maintenir la cale en position pendant le moulage et en raison des défauts d'aspect.

Des solutions alternatives consistent à fixer les porte-agrafes au moyen d'adhésif, ou bien par soudage ou par bouterollage. Cependant ces solutions présentent l'inconvénient d'être onéreuses.

Afin de pallier ces inconvénients, l'invention a pour objet une pièce d'aspect comportant au moins un moyen de fixation dont la conception, simple et peu chère, permet d'éviter les défauts d'aspect.

A cet effet, l'invention propose une pièce d'aspect du type cité ci-dessus, caractérisée en ce que les parois latérales du pontet comportent, sur leurs faces externes, des nervures dont une extrémité se prolonge en saillie par rapport à un plan défini par un bord des parois latérales opposé à la paroi de support d'agrafe et est raccordée à la face interne de la pièce d'aspect de manière qu'un espace soit ménagé entre le plan défini par le bord des parois latérales et la face interne de la pièce d'aspect.

Selon d'autres caractéristiques de l'invention:
- Les nervures sont orientées selon des plans transversaux sensiblement perpendiculaires au plan médian et au plan de référence.
- Les parois latérales sont reliées entre elles par une paroi d'extrémité, un espace étant ménagé entre un bord de la paroi d'extrémité et la face interne de la pièce.
- Les nervures sont amincies au niveau de leur zone de raccordement à la face interne de la pièce d'aspect, une partie interne desdites nervures présentant un décrochement.
- Les parois latérales du pontet sont prolongées par une nervure supplémentaire d'orientation sensiblement parallèle au plan médian.
- La nervure supplémentaire est agencée à proximité de la paroi d'extrémité.
- Le plan R défini par les bords des parois latérales forme un angle avec le plan de référence de la pièce, de manière à faciliter le démoulage.

D'autres caractéristiques et avantages de l'invention apparaîtront à la lecture de la description d'exemples de réalisation une pièce d'aspect en référence aux dessins annexés dans lesquels :
- La figure 1 est une vue en perspective d'une pièce comportant un moyen de fixation selon l'état de la technique.
- La figure 2 est une vue en perspective d'une pièce comportant un moyen de fixation selon l'invention.
- La figure 3 est une vue latérale de la pièce de la figure 2.
- La figure 4 est une vue en coupe de la pièce de la figure 3, selon la direction IV-IV.
- La figure 5 est une vue en coupe de la pièce de la figure 3 selon la direction V-V.

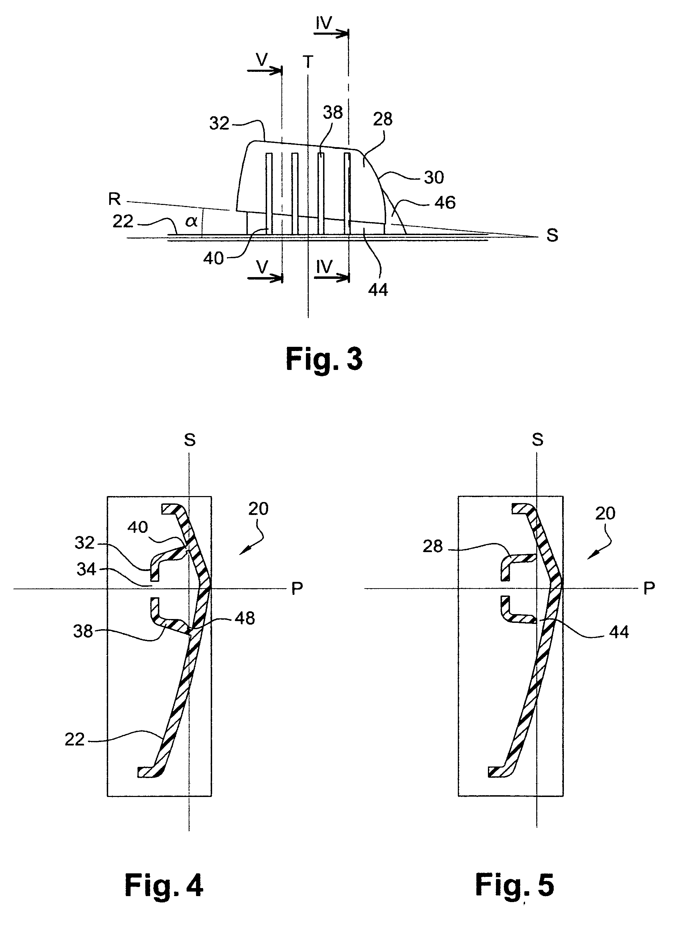

Tel que représenté aux figures 2 et 3, une pièce d'aspect en matière plastique injectée 20 présente une surface sensiblement plane. La surface de la pièce peut aussi être incurvée, mais pour des raisons pratiques, nous prendrons comme référence un plan S.

La pièce d'aspect 20 peut être par exemple une baguette latérale destinée à équiper une porte de véhicule automobile.

La pièce d'aspect 20 comporte, sur sa face interne 22 un moyen de fixation 24 qui est constitué par un pontet 26 de plan médian P, destiné à porter une agrafe de fixation (non représentée).

Le pontet 26 présente deux parois latérales 28 opposées par rapport au plan médian P. Les parois latérales 28 sont reliées entre elles par une paroi d'extrémité 30, d'orientation sensiblement parallèle à un plan transversal T, ledit plan transversal T étant perpendiculaire au plan médian P et au plan de référence S. Le pontet 26 présente un profil en forme de U : une paroi 32, sensiblement parallèle au plan de référence S de la pièce 20, relie entre elles les parois latérales 28 ainsi que la paroi d'extrémité 30. La paroi 32 comporte une ouverture 34 destinée à recevoir l'agrafe.

Les parois latérales 28 présentent, sur leur face externe 36, une pluralité de nervures 38, parallèles entre elles et orientées selon un plan transversal parallèle au plan T.

Tel que représenté aux figures 3 et 4, les nervures 38 présentent chacune une extrémité 40, en saillie par rapport à un bord 42 des parois latérales 28, ledit bord 42 étant opposé à la paroi de support d'agrafe 32. Les bords 42 des parois latérales 28 définissent un plan R sensiblement perpendiculaire au plan médian P.

Cependant, dans un autre mode de réalisation, non représenté, le plan R peut ne pas être perpendiculaire au plan médian P, le moyen de fixation 24 pouvant ne pas présenter de symétrie par rapport au plan médian P.

Tel que représenté aux figures 3 et 5, les extrémités 40 des nervures 38 sont raccordées à la face interne 22 de la pièce 20, de façon qu'un espace 44 soit ménagé entre le bord 42 et la face interne 22 de la pièce 20.

Les nervures 38 présentent un profil s'inscrivant dans un triangle dont un des côtés est raccordé à la face interne 22 de la pièce 20.

Tel que représenté à la figure 4, les nervures 38 sont amincies au niveau de leur zone de raccordement à la face interne 22 de la pièce 20 : ainsi une partie interne 46 des nervures 38 présente un décrochement 48, de façon à faciliter le démoulage.

Le pontet 26 n'est donc relié à la face interne 22 de la pièce 20 que par des zones de raccordement sensiblement ponctuelles, formées par les extrémités 42 des nervures 38.

En outre, tel que représenté aux figures 2 et 3, de manière à améliorer la tenue du moyen de fixation en cisaillement selon une direction correspondant à la trace définie par l'intersection entre le plan médian P et le plan de référence S, il peut être prévu dans le prolongement des parois latérales 28 une nervure supplémentaire 46, d'orientation sensiblement parallèle au plan médian P. Les nervures supplémentaires 46 sont localisées à proximité de la paroi d'extrémité 32.

Le moulage de la pièce nécessite un moule (non représenté) comportant une cale coulissante (non représentée) destinée à être insérée à l'intérieur du pontet 26.

Tel que représenté à la figure 3, afin de faciliter le démoulage de la cale, le plan R formé par les bords 42 des parois latérales 28 forme un angle α avec le plan de référence S de la pièce 20.

Par ailleurs, les nervures 38 sont formées en poinçon par l'empreinte du moule et non pas par la cale, ce qui présente plusieurs avantages :
- la portée de la cale dans le logement ménagé dans le pontet 26 est augmentée, ce qui permet de limiter les déformations liées au pressions d'injection,
- les contraintes de retrait sur la cale sont réduites ce qui permet un démoulage plus facile et sans contrainte sur la pièce 20,
- les nervures 38 permettent de maintenir la pièce 20 dans le moule pendant que la cale est retirée.

La pièce d'aspect 20 selon l'invention présente donc moins de défauts d'aspect tels que des ondulations ou des retassures, par exemple, mais aussi tels que les traces de flux pouvant apparaitre derrière la cale.

En outre, la tenue du moyen de fixation à l'arrachement est améliorée.

## Revendications

1. Pièce d'aspect (20) en matière plastique injectée, comportant une partie sensiblement plane, orientée selon un plan de référence (S), dont une face interne (22) est munie d'au moins un moyen de fixation (24), le moyen de fixation (24) étant constitué par un pontet (26) de plan médian (P), apte à supporter une agrafe et présentant deux parois latérale (28), opposées par rapport au plan médian (P) et reliées entre elle par une paroi (32) de support d'agrafe, **caractérisée en ce que** les parois latérales (28) du pontet (26) comportent, sur leurs faces externes (36), des nervures (38) dont une extrémité (40) se prolonge en saillie par rapport à un plan (R) défini par un bord (42) des parois latérales (28) opposé à la paroi de support d'agrafe (32) et est raccordée à la face interne (22) de la pièce d'aspect (20) de manière qu'un espace (44) soit ménagé entre le plan (R) et la face interne (22) de la pièce d'aspect (20).

2. Pièce d'aspect (20) selon la revendication 1, **caractérisée en ce que** les nervures (38) sont orientées selon des plans transversaux sensiblement perpendiculaires au plan médian (P) et au plan de référence (S).

3. Pièce d'aspect (20) selon l'une quelconque des revendications précédentes, **caractérisée en ce que** les parois latérales (28) sont reliées entre elles par une paroi d'extrémité (30), un espace étant ménagé entre un bord de la paroi d'extrémité (30) et la face interne (22) de la pièce (20).

4. Pièce d'aspect (20) selon l'une quelconque des revendications précédentes, **caractérisée en ce que** les nervures (38) sont amincies au niveau de leur zone de raccordement à la face interne (22) de la pièce d'aspect (20), une partie interne desdites nervures (38) présentant un décrochement (48).

5. Pièce d'aspect (20) selon l'une quelconque des revendications précédentes, **caractérisée en ce que** les parois latérales (28) du pontet (26) sont prolongées par une nervure supplémentaire (46) d'orientation sensiblement parallèle au plan médian (P).

6. Pièce d'aspect (20) selon la revendication précédente, **caractérisée en ce que** la nervure supplémentaire (46) est agencée à proximité de la paroi d'extrémité (30).

7. Pièce d'aspect (20) selon l'une quelconque des revendications précédentes, **caractérisée en ce que** le plan (R) défini par les bords (42) des parois latérales (28) forme un angle (α) avec le plan de référence (S) de la pièce (20), de manière à faciliter le démoulage.

## Claims

1. Appearance part (20) made of injected plastic, comprising a substantially flat portion, oriented along a reference plane (S), of which an inner face (22) is furnished with at least one fastening means (24), the fastening means (24) consisting of a mid-plane (P) yoke (26), capable of supporting a fastener and having two lateral walls (28) that are opposite relative to the mid-plane (P) and connected together by a fastener-supporting wall (32), **characterized in that** the lateral walls (28) of the yoke (26) comprise, on their outer faces (36), ribs (38) of which one end (40) extends as a protrusion relative to a plane (R) defined by an edge (42) of the lateral walls (28) opposite to the fastener-supporting wall (32) and is connected to the inner face (22) of the appearance part (20) so that a space (44) is arranged between the plane (R) and the inner face (22) of the appearance part (20).

2. Appearance part (20) according to Claim 1, **characterized in that** the ribs (38) are oriented along transverse planes substantially perpendicular to the mid-plane (P) and to the reference plane (S).

3. Appearance part (20) according to either one of the preceding claims, **characterized in that** the lateral walls (28) are connected together by an end wall (30), a space being arranged between one edge of the end wall (30) and the inner face (22) of the part (20).

4. Appearance part (20) according to any one of the preceding claims, **characterized in that** the ribs (38) are made thinner in their zone of connection to the inner face (22) of the appearance part (20), an inner portion of the said ribs (38) having a recess (48).

5. Appearance part (20) according to any one of the preceding claims, **characterized in that** the lateral walls (28) of the yoke (26) are extended by an additional rib (46) that is oriented substantially parallel to the mid-plane (P).

6. Appearance part (20) according to the preceding claim, **characterized in that** the additional rib (46) is arranged close to the end wall (30).

7. Appearance part (20) according to any one of the preceding claims, **characterized in that** the plane (R) defined by the edges (42) of the lateral walls (28) forms an angle (α) with the reference plane (S) of the part (20) so as to make it easier to strip from the mould.

## Patentansprüche

1. Zierbauteil (20) aus Spritzkunststoff, das einen gemäß einer Bezugsebene (S) ausgerichteten, im Wesentlichen ebenen Teil aufweist, von dem eine Innenseite (22) mit mindestens einer Befestigungseinrichtung (24) versehen ist, wobei die Befestigungseinrichtung (24) aus einem Bügel (26) mit einer Mittelebene (P) besteht, der eine Klammer tragen kann und zwei Seitenwände (28) aufweist, die bezüglich der Mittelebene (P) entgegengesetzt sind und miteinander durch eine Klammertragwand (32) verbunden sind, **dadurch gekennzeichnet, dass** die Seitenwände (28) des Bügels (26) auf ihren Außenseiten (36) Rippen (38) aufweisen, von denen ein Ende (40) sich bezüglich einer von einem Rand (42) der Seitenwände (28) entgegengesetzt zur Klammertragwand (32) definierten Ebene (R) vorstehend verlängert und mit der Innenseite (22) des Zierbauteils (20) so verbunden ist, dass ein Zwischenraum (44) zwischen der Ebene (R) und der Innenseite (22) des Zierbauteils (20) ausgespart wird.

2. Zierbauteil (20) nach Anspruch 1, **dadurch gekennzeichnet, dass** die Rippen (38) gemäß Querebenen im Wesentlichen lotrecht zur Mittelebene (P) und zur Bezugsebene (S) ausgerichtet sind.

3. Zierbauteil (20) nach einem der vorhergehenden Ansprüche, **dadurch gekennzeichnet, dass** die Seitenwände (28) miteinander durch eine Endwand (30) verbunden sind, wobei ein Zwischenraum zwischen einem Rand der Endwand (30) und der Innenseite (22) des Bauteils (20) ausgespart ist.

4. Zierbauteil (20) nach einem der vorhergehenden Ansprüche, **dadurch gekennzeichnet, dass** die Rippen (38) sich im Bereich ihrer Verbindungszone mit der Innenseite (22) des Zierbauteils (20) verdünnen, wobei ein innerer Teil der Rippen (38) einen Rücksprung (48) aufweist.

5. Zierbauteil (20) nach einem der vorhergehenden Ansprüche, **dadurch gekennzeichnet, dass** die Seitenwände (28) des Bügels (26) durch eine zusätzliche Rippe (46) einer Ausrichtung im Wesentlichen parallel zur Mittelebene (P) verlängert werden.

6. Zierbauteil (20) nach dem vorhergehenden Anspruch, **dadurch gekennzeichnet, dass** die zusätzliche Rippe (46) in der Nähe der Endwand (30) angeordnet ist.

7. Zierbauteil (20) nach einem der vorhergehenden Ansprüche, **dadurch gekennzeichnet, dass** die von den Rändern (42) der Seitenwände (28) definierte Ebene (R) einen Winkel (α) mit der Bezugsebene (S) des Bauteils (20) bildet, um das Ausformen zu erleichtern.
